# EUROPEAN PATENT SPECIFICATION

(11) **EP 2 366 536 B1**
(45) Date of publication and mention of the grant of the patent: **17.10.2018**
(21) Application number: 11155547.0
(22) Date of filing: 23.02.2011
(51) Int. Cl.: B30B 9/32, B29B 17/00, B30B 9/30

(54) **Bottle-press device for the disposal of a plastic bottle or can, in particular for domestic use**
Flaschenpressvorrichtung zur Entsorgung einer Kunststoffflasche oder Dose, insbesondere zur Verwendung im Haushalt
Dispositif de pressage de bouteilles pour la mise au rebut d'une bouteille en plastique ou canette, en particulier pour un usage domestique

(30) Priority: 16.03.2010 IT BS20100052
(43) Date of publication of application: 21.09.2011
(73) Proprietor: Zelo S.r.l., 20100 Milano (IT)
(72) Inventor: Labemano, Edoardo, I-25060, Polaveno, BRESCIA (IT)
(74) Representative: Pulieri, Gianluca Antonio

(56) References cited:
- WO-A2-2007/060651
- CH-A5- 681 794
- DE-A1- 10 121 599
- FR-A1- 2 166 262
- FR-A1- 2 668 732
- FR-A1- 2 692 190
- FR-A1- 2 712 230
- FR-A1- 2 791 284
- JP-A- 11 221 825
- JP-A- 2003 211 296
- US-A- 4 334 469

## Description

The present invention relates to a bottle-press device for the disposal of a plastic bottle or can, in particular for domestic use.

In the recycling of waste, especially of that produced in great quantity on a daily basis, such as objects in plastic, glass, aluminium, paper, the consumer plays a fundamental role, taking care to separate and dispose of such correctly.

Devices assisting effective waste disposal are therefore becoming widespread in the home.

Of these manual bottle-press devices are proving particularly useful, able, albeit with numerous limitations, to press bottles or similar containers in plastic, so as to reduce the size of the pressed bottle and thereby considerably increase the number of pressed bottles which can be contained in a rubbish bag or container for disposal.

However, today's bottle-press devices have several drawbacks. Mainly, it has been found that despite screwing the cap to the pressed bottle, pressing a bottle with one of today's known device shows a considerable structural return; an increase in volume of the pressed bottle compared to the minimum size achievable results, and therefore a reduction of the advantages spoken of above. The document WO 2007/060651 A2 discloses a bottle-press device in accordance with the preamble of claim 1.

The purpose of the present invention is to make a bottle-press device for the disposal of plastic bottles, in particular for domestic use, which overcomes the drawbacks spoken of.

Such purpose is achieved by a bottle-press device according to claim 1.

The characteristics and advantages of the bottle-press device according to the present invention will be evident from the description given below, made by way of a non-limiting example, according to the appended drawings, wherein:

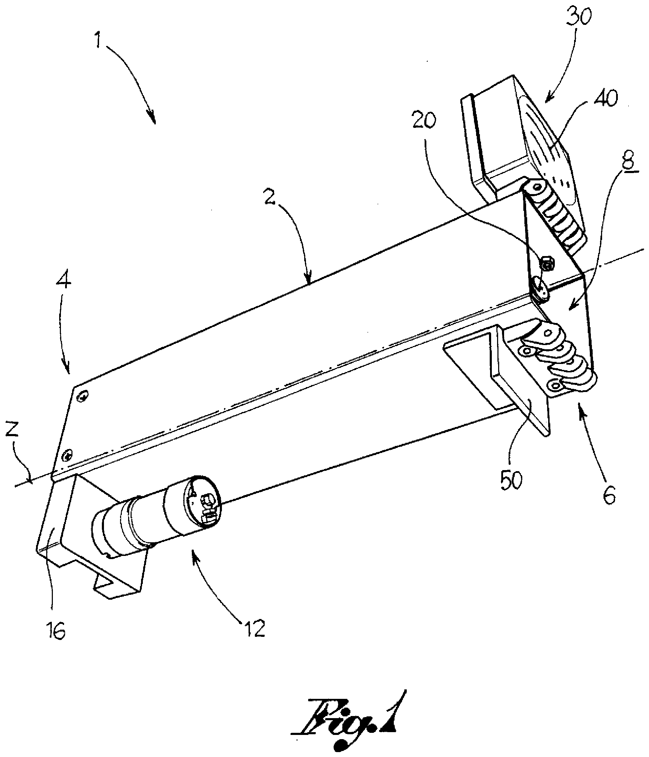

- figure 1 shows a bottle-press device according to a preferred embodiment of the present invention, in an open configuration;

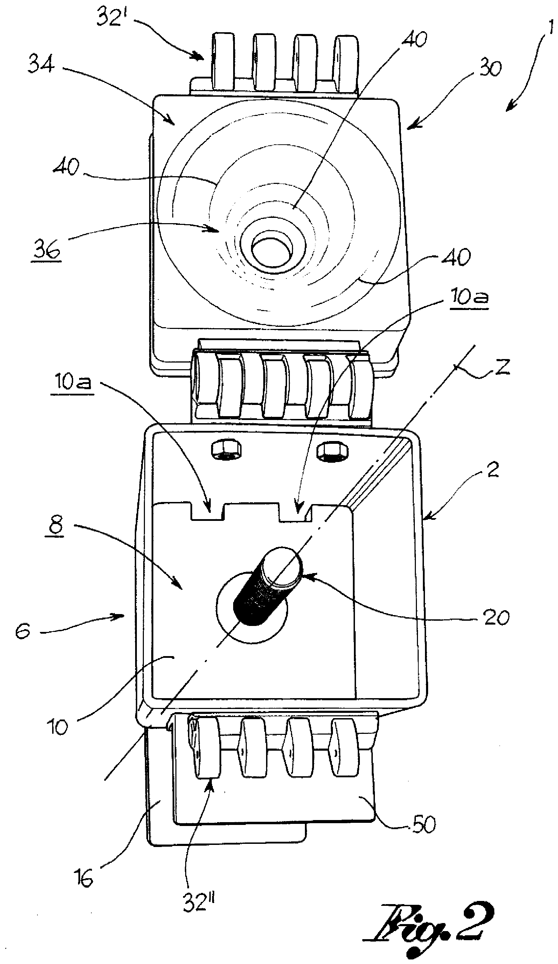

- figure 2 shows the bottle-press device in figure 1, seen from the front;

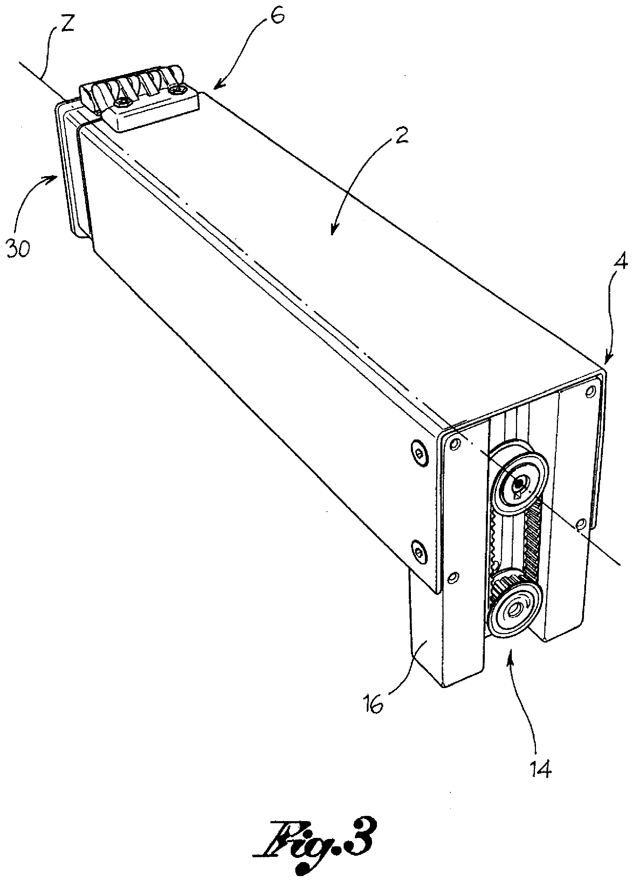

- figure 3 shows the bottle-press device in figure 1, seen from the back, in a closed configuration; and
- figure 4 shows an example of a bottle pressed using the device according to the present invention.

According to a preferred embodiment of the present invention, a bottle-press device 1 for bottles or cans comprises a box-like body 2 having its main extension along a longitudinal axis Z, between a bottom end 4, for example rear, and an access end 6, or front end.

The box-like body 2 has an inner compartment 8, having a shaped cross-section suitable to form an anti-rotation constraint. For example, the inner compartment 8 has a square or rectangular or polygonal cross-section.

The device 1 further comprises a plate 10 sliding upon command inside the box-like body 2, preferably counter-shaped to the cross-section of the compartment 8.

For example, the plate 10 is square or rectangular or polygonal.

The device 1 comprises actuating means operatively connected to the plate 10 to move it along the longitudinal axis Z.

For example, the actuating means comprise an electric motor 12 and kinematic mechanisms 14, connected to the plate 10 to move it in translation.

For example, the electric motor 12 is positioned outside the box-shaped body 12, for example connected to a flange 16 positioned at the bottom end 4, projecting from the box-like body 2.

The device 1 further comprises an engagement element 20, positioned inside the box-shaped body 2, suitable for inserting in the mouth of a bottle to be pressed. In particular, the bottle to be pressed is inserted axially on the engagement element 20, which supports it.

According to the invention, the engagement element 20 is a rod, housed in the compartment 8, extending along the longitudinal axis Z.

The rod traverses the plate 10, projecting centrally from it.

Moreover, the engagement element 20 is a threaded rod, operatively connected to the electric motor 12 by the kinematic mechanisms 14, engaged with the plate 10 in a screw-nut system enabling translation of the plate 10 by rotation of the engagement element 20 around the longitudinal axis Z.

In other words, the plate 10 is provided with a threaded hole, engaged with the engagement element 20 and is engaged by an anti-rotational shaped coupling with the compartment 8, so that rotation of the engagement element 20 corresponds with translation of the plate 10.

Preferably, moreover, the plate 10 is provided with passages 10a through the thickness, towards the rear part, to facilitate washing operations and the drainage of liquids. For example, the plate 10 has recesses along its rim, which form said passages together with the walls of the body 2.

According to one embodiment, said passages are made inside the surface of the plate.

According to a preferred embodiment of the present invention, the device 1 comprises a closure 30, suitable to couple with the box-like body 2, at the access end 6 of this, to prevent the exit of the integral and pressed bottle from the compartment 8.

According to one embodiment the closure 30 is hinged to the box-like body 2 and comprises blocking means 32', 32" suitable to keep said closure in the closed configuration.

The closure 30, made in the shape of a plate, has an outer side, which when the closure 30 is open, faces the outside of the compartment 8 and an inner side 34, which when the closure 30 is closed faces the inside of the compartment 8.

According to the invention, the closure 30 has, on the inner side of compartment 34, a concave recess 36, suitable to house the bottom of the bottle to be pressed.

The recess 36 is in the shape of a dome, centred in relation to the longitudinal axis Z, extending as far as the rims of the inner side 34 of the closure 30.

Preferably, the surface of the recess 36 has non-slip means, suitable to limit the slipping of the bottom of the bottle. For example, said non-slip means comprise a plurality of concentric steps 40.

Preferably, moreover, the device 1 comprises a pair of feet to support the box-like body 2 on a support surface.

For example, the flange 16 forms one of said feet, near the bottom end 4. In addition, a further flange 50 forms the other of said feet, near the access end 6.

Preferably, the feet 16, 50 are suitable to keep the longitudinal axis Z inclined in relation to the support surface of the device 1, inclined forwards towards the access end 6.

For example, the flange 16 is higher than the further flange 50, thereby making the box-like body 2 tilt downwards for effective drainage of any liquids left by the bottle to be pressed in the compartment 8.

During normal use of the device 1, in an initial configuration, the plate 10 is near the bottom end 4 of the box-like body 2 and the bottle to be pressed is inserted in the engagement element 20 through the mouth. The closure 30 is then closed and blocked in the closed position.

The actuation means are activated, so that the plate 10 translates from the rearward position maintained in the initial configuration, to a forward position along the longitudinal axis Z, near the access end 6, in a final configuration.

During the translation of the plate 10, the bottle is pressed between the plate 10 which advances and the closure 30, in particular inside the recess 36.

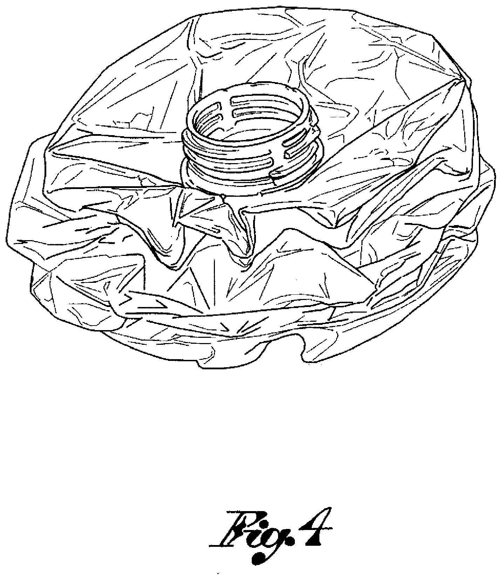

At the end of the pressing operation, the closure 30 is opened and the pressed bottle (figure 4) is extracted from the engagement element 20.

Innovatively, the bottle-press device according to the present invention makes it possible to overcome the drawbacks of the prior art.

In particular, it has been seen, surprisingly, how the pressed bottle, once extracted from the compartment of the device, shows no return or an extremely limited return, much less than with the devices of the prior art.

It is believed that such surprising effect is to be attributed, among other things, to the engagement element, which holds the bottle in position during pressing.

It is further believed that such surprising effect is also to be attributed to the shape of the closure, which holds the bottom of the bottle in position.

In addition, the result is further improved by the combination of such features.

Advantageously, moreover, the device according to the invention has a shape which facilitates washing, including of the inner parts.

According to a further advantageous aspect, the device according to the invention makes it possible to save lots of space, above all to reduce the longitudinal dimensions, in that the bottle is inserted on the engagement element.

It is clear that a person skilled in the art may make modifications to the device described above so as to satisfy contingent requirements, all contained within the sphere of protection as defined by the appended claims.

## Claims

1. Bottle-press device (1) for the disposal of a plastic bottle or a can, comprising:
- a box-like body (2) having its main extension along a longitudinal axis (Z), between a bottom end (4) and an access end (6) provided with an inner compartment (8);
- a plate (10) slidable upon command in the inner compartment (8), between the bottom end and the access end;
- actuating means operatively connected to the plate (10) to move it in translation along the longitudinal axis (Z);
- an engagement element (20), positioned in the compartment (8), suitable for being inserted at least partially in the mouth of the bottle or can, supporting it;
- a closure (30) at the access end, suitable for closing off access to the compartment (8);
wherein the closure (30) has, on the inner side (34), a recess (36) to house the bottom of the bottle or can; wherein the bottle-press device is **characterized by** the fact that said recess (36) is in the shape of a dome centred in relation to the longitudinal axis (Z) and by the fact that the engagement element is a rod which extends along the longitudinal axis (Z) and that traverses the plate (10), and that said rod is operatively connected to the actuating means and forms a screw-nut system with the plate (10).

2. Device according to claim 1, wherein the recess (36) comprises non-slip means on the surface.

3. Device according to claim 2, wherein said non-slip means comprise a plurality of concentric steps (40).

4. Device according to any of the preceding claims, wherein the plate (10) is engaged with the compartment (8) by an anti-rotational shaped coupling around the longitudinal axis (Z).

5. Device according to any of the previous claims, comprising support feet (16, 50) of the box-shaped body (2) suitable to keep the body (2) inclined forwards towards the access end (6) on the support surface.

6. Device according to any of the previous claims, wherein the plate (10) is provided with passages (10a) through the thickness towards the rear part.

7. Device according to any of the previous claims, wherein the actuating means comprise an electric motor (12).

## Patentansprüche

1. Flaschenpressvorrichtung (1) zur Entsorgung einer Kunststoffflasche oder einer Dose, umfassend:
- einen kastenartigen Körper (2), dessen Haupterstreckung sich entlang einer Längsachse (Z) zwischen einem unteren Ende (4) und einem Zugangsende (6) befindet, das mit einem inneren Fach (8) versehen ist;
- eine Platte (10), die auf Befehl in dem inneren Fach (8) zwischen dem unteren Ende und dem Zugangsende verschiebbar ist;
- Betätigungsmittel, die operativ mit der Platte (10) verbunden sind, um sie in Translation entlang der Längsachse (Z) zu bewegen;
- ein Eingriffselement (20), positioniert in dem Fach (8), das geeignet ist, zumindest teilweise in die Mündung der Flasche oder Dose eingesetzt zu werden, die es stützt bzw. trägt;
- einen Verschluss (30) an dem Zugangsende, der geeignet ist, den Zugang zu dem Fach (8) zu verschließen;
wobei der Verschluss (30) an der Innenseite (34) eine Vertiefung (36) aufweist, um den Boden der Flasche oder Dose aufzunehmen bzw. unterzubringen;
wobei die Flaschenpressvorrichtung durch die Tatsache gekennzeichnet ist, dass die Vertiefung (36) in der Form einer Kalotte bzw. eines Doms ist, die bzw. der in Bezug auf die Längsachse (Z) zentriert ist, und durch die Tatsache, dass das Eingriffselement eine Stange ist, die sich entlang der Längsachse (Z) erstreckt und die Platte (10) durchquert, und dass die Stange operativ mit den Betätigungsmitteln verbunden ist und ein Schraube-Mutter-System mit der Platte (10) bildet.

2. Vorrichtung nach Anspruch 1, wobei die Vertiefung (36) rutschfeste Mittel an der Oberfläche umfasst.

3. Vorrichtung nach Anspruch 2, wobei die rutschfesten Mittel mehrere konzentrische Stufen (40) umfassen.

4. Vorrichtung nach einem der vorhergehenden Ansprüche, wobei die Platte (10) mit dem Fach (8) durch eine drehsichere geformte Kupplung um die Längsachse (Z) in Eingriff steht.

5. Vorrichtung nach einem der vorhergehenden Ansprüche, umfassend Stütz- bzw. Trägerfüße (16, 50) des kastenförmigen Körpers (2), die geeignet sind, den Körper (2) nach vorne in Richtung auf das Zugangsende (6) an der Stützfläche geneigt zu halten.

6. Vorrichtung nach einem der vorhergehenden Ansprüche, wobei die Platte (10) mit Durchgängen (10a) durch die Dicke zu dem hinteren Teil hin versehen ist.

7. Vorrichtung nach einem der vorhergehenden Ansprüche, wobei die Betätigungsmittel einen Elektromotor (12) umfassen.

## Revendications

1. Dispositif de pressage de bouteilles (1) pour la mise au rebut d'une bouteille en plastique ou d'une canette, comprenant :
- un corps de type boîte (2) ayant son extension principale le long d'un axe longitudinal (Z), entre une extrémité inférieure (4) et une extrémité d'accès (6) dotée d'un compartiment interne (8) ;
- une plaque (10) pouvant coulisser sur commande dans le compartiment interne (8), entre l'extrémité inférieure et l'extrémité d'accès ;
- des moyens d'actionnement liés fonctionnellement à la plaque (10) pour la déplacer en translation le long de l'axe longitudinal (Z) ;
- un élément de mise en prise (20), positionné dans le compartiment (8), adapté à être inséré au moins partiellement dans l'embouchure de la bouteille ou de la canette, le supportant ;
- une fermeture (30) au niveau de l'extrémité d'accès, adaptée à fermer l'accès au compartiment (8) ;
dans lequel la fermeture (30) a, sur le côté interne (34), un évidement (36) pour loger la partie inférieure de la bouteille ou de la canette ;
dans lequel le dispositif de pressage de bouteilles est **caractérisé par le fait que** ledit évidement (36) se présente sous la forme d'un dôme centré par rapport à l'axe longitudinal (Z) et **par le fait que** l'élément de mise en prise est une tige qui s'étend le long de l'axe longitudinal (Z) et qui traverse la plaque (10), et en ce que ladite tige est liée fonctionnellement aux moyens d'actionnement et forme un système vis-écrou avec la plaque (10).

2. Dispositif selon la revendication 1, dans lequel l'évidement (36) comprend des moyens antidérapants sur la surface.

3. Dispositif selon la revendication 2, dans lequel lesdits moyens antidérapants comprennent une pluralité de pas concentriques (40).

4. Dispositif selon l'une quelconque des revendications précédentes, dans lequel la plaque (10) est en prise avec le compartiment (8) par un couplage de forme anti-rotationnelle autour de l'axe longitudinal (Z).

5. Dispositif selon l'une quelconque des revendications précédentes, comprenant des pattes de support (16, 50) du corps en forme de boîte (2) adaptées à maintenir le corps (2) incliné vers l'avant vers l'extrémité d'accès (6) sur la surface de support.

6. Dispositif selon l'une quelconque des revendications précédentes, dans lequel la plaque (10) est dotée de passages (10a) à travers l'épaisseur vers la partie arrière.

7. Dispositif selon l'une quelconque des revendications précédentes, dans lequel les moyens d'actionnement comprennent un moteur électrique (12).
